# FASCICULE DE BREVET EUROPEEN

(11) **EP 4 127 287 B1**
(45) Date de publication et mention de la délivrance du brevet: **08.05.2024**
(21) Numéro de dépôt: 21716500.0
(22) Date de dépôt: 18.03.2021
(51) Int. Cl.: D04H 1/4209, C03C 25/002, C03C 25/005, D04H 1/4218, D04H 1/587, D04H 1/60, D06B 1/02, C03C 25/36, D06B 19/00, C03C 25/146, C03C 25/26, C03C 25/34

(54) **PROCEDE DE FABRICATION DE PRODUITS D'ISOLATION A BASE DE LAINE MINERALE UTILISANT UN LIANT SOLIDE THERMODURCISSABLE**
VERFAHREN ZUR HERSTELLUNG VON ISOLIERPRODUKTEN AUF MINERALWOLLEBASIS UNTER VERWENDUNG EINES FESTEN WÄRMEHÄRTBAREN BINDEMITTELS
METHOD FOR MANUFACTURING INSULATION PRODUCTS BASED ON MINERAL WOOL USING A SOLID THERMOSETTING BINDER

(30) Priorité: 24.03.2020 FR 2002863
(43) Date de publication de la demande: 08.02.2023
(73) Titulaire: SAINT-GOBAIN ISOVER, 92400 Courbevoie (FR)
(72) Inventeur: SECK, Mamadou, 60100 CREIL (FR); DELMÉE, Mickaël, 60130 WAVIGNIES (FR)
(74) Mandataire: Saint-Gobain Recherche
(86) Numéro de dépôt international: PCT/FR2021/050457
(87) Numéro de publication internationale: WO 2021/191533

(56) Documents cités:
- EP-A1- 2 602 368
- WO-A1-2013/014399
- WO-A1-2017/036838
- FR-A1- 2 138 284
- FR-A1- 2 603 518

## Description

La présente invention concerne un procédé de fabrication de produits d'isolation à base de laine minérale liée par un liant organique, comprenant la fixation d'une poudre de liant hydrosoluble et thermodurcissable, sur des fibres de laine minérale préalablement humectées.

La fabrication de produits d'isolation à base de laine minérale comprend généralement une étape de fabrication de fibres de verre ou de roche par un procédé de centrifugation de verre fondu ou de roche fondue (fibrage). Les fibres nouvellement formées sont entrainées par un flux d'air chaud vers un tapis convoyeur qui les recueille (formage) et les transporte à travers une étuve de cuisson. Sur le trajet entre le dispositif de centrifugation (fibrage) et le tapis de collecte des fibres, on pulvérise sur les fibres une composition aqueuse de liant thermodurcissable qui subit ensuite dans l'étuve de cuisson une réaction de thermodurcissement à des températures d'environ 200 °C.

Les compositions aqueuses de liant sont des solutions aqueuses diluées, peu visqueuses, de réactifs monomères, de résines oligomères et/ou de polymères. Elles sont pulvérisées sur les fibres minérales encore chaudes, nouvellement formées, au moyen d'une couronne de pulvérisation située en aval du dispositif de centrifugation, à proximité immédiate de ce dernier.

Lorsque les fibres sont recueillies et assemblées sous forme de matelas (ou *loft*) sur le tapis collecteur, elles sont collantes et le film de composition de liant qui enveloppe les fibres minérales contient encore de l'eau.

Ce n'est que lorsque le matelas de laine minérale encollée entre dans l'étuve de cuisson thermostatée que l'évaporation de l'eau est parachevée et que la réaction de condensation des réactifs du liant débute.

Une installation de fabrication de produits isolants à base de laine minérale liée par des liants organiques qui fonctionne de la manière décrite ci-dessus (pulvérisation de composition de liant sur les fibres encore chaudes, évaporation partielle de l'eau, formation d'un matelas de fibres collantes, cuisson du matelas de fibres collantes dans l'étuve), comprend nécessairement un système de lavage des installations, en particulier un système de lavage de la chambre de formage et du tapis collecteur. En effet la pégosité élevée des fibres encollées, encore humides, véhiculées dans un flux d'air chaud entre le dispositif de fibrage et le tapis convoyeur, conduit à l'encrassement des parois de la chambre de formage, du tapis convoyeur et du dispositif d'aspiration sous celui-ci.

L'eau de lavage est recyclée en circuit fermé, filtrée, neutralisée et réutilisée pour la fabrication de solutions de liant et pour le lavage des équipements de production. Le système de lavage des installations de production et le recyclage des eaux de lavage en circuit fermé représentent une fraction importante des coûts d'investissement et de fonctionnement d'une installation de production de produits isolants à base de laine minérale liée.

La présente invention a pour but de proposer un procédé de fabrication de produits isolants à base de laine minérale liée par un liant organique qui ne comporte pas d'étape au cours de laquelle des fibres minérales encollées par une composition de liant, partiellement séchées et collantes, sont véhiculées au moyen d'un flux d'air entre le dispositif de fibrage et la zone de formage d'un matelas.

Dans le procédé de fabrication de produits d'isolation de la présente invention, le liant n'est pas appliqué sur des fibres minérales néoformées, encore chaudes, mais sur des fibres minérales à température ambiante (c'est-à-dire en équilibre thermique avec l'environnement qui les entoure).

Les inventeurs ont déposé le 9 janvier 2020 une demande de brevet français (FR2000151), non encore publiée au moment du dépôt de la présente demande, pour un procédé comprenant l'application d'une composition aqueuse de liant sur des fibres minérales à température ambiante, le séchage de la composition aqueuse de liant à une température modérée, puis le durcissement des réactifs du liant par thermoréticulation.

Le procédé de la présente invention ne consiste pas à appliquer sur les fibres minérales à lier une solution aqueuse d'un liant réactif, thermodurcissable, mais à fixer sur les fibres minérales des particules solides de réactifs thermodurcissables, également appelées ci-après « particules de liant ». Les particules solides de réactifs thermodurcissables se présentent sous forme d'une poudre s'écoulant librement, autrement dit les particules de liant ne sont pas collantes et n'adhèrent donc pas spontanément aux fibres. Si on mélangeait simplement les particules de liant avec des fibres minérales, les particules passeraient à travers le réseau de fibres et se rassembleraient, sous l'effet de la gravité, en certains endroits du produit.

Les inventeurs se sont ainsi trouvés devant la difficulté de fixer ces particules de liant sur les fibres minérales afin d'obtenir une distribution régulière des particules de liant dans le mélange fibres/particules dans le but de répartir de la manière la plus homogène possible le liant dans le produit d'isolation final, ce qui garantit des propriétés mécaniques uniformes.

Les demandes internationales WO2017/036838 et WO2017/08639 divulguent un procédé de fabrication de produits isolants à base de laine minérale dans lequel des particules de liant à base de carbohydrates sont simplement mélangés avec des fibres de laine minérale, le mélange étant ensuite chauffé sous compression. Les produits obtenus ont des masses volumiques élevées, de l'ordre de 500 kg/m³, et des taux de liant importants, de l'ordre de 10 % en poids. Le procédé décrit dans ces demandes n'est toutefois pas applicable à des produits d'isolation de masse volumique plus faible, par exemple de quelques dizaines de kg par mètre cube seulement. Dans un mélange physique peu dense de particules et de fibres, les particules ont en effet tendance, sous l'effet de la force gravitationnelle, à passer à travers le réseau peu dense de fibres minérales et à se rassembler dans les couches inférieures du mélange.

Le moyen que les inventeurs ont trouvé pour surmonter cette difficulté est simple, économique et efficace, et ne présente par ailleurs aucun problème écologique et/ou de santé pour le personnel de l'usine. Les inventeurs ont en effet constaté qu'il suffisait d'humecter légèrement les fibres minérales avant de les mettre en contact avec les particules de liant, pour que le mince film de liquide, généralement de l'eau ou un liquide aqueux, déposé à la surface des fibres retienne les particules de liant et les empêche de se rassembler dans les zones inférieures du mélange, même si ce dernier est de faible densité. Il convient simplement de veiller à ce que la quantité de liquide d'humidification ne soit pas trop importante afin d'éviter la dissolution des particules dans le film de liquide.

La présente invention a ainsi pour objet un procédé de fabrication de produits d'isolation à base de laine minérale liée par un liant organique dans lequel on met en contact des particules de liant avec des fibres minérales préalablement humectées, avant de chauffer le mélange ainsi obtenu à une température suffisante pour faire réagir les réactifs du liant et former ainsi un liant insoluble et infusible.

L'invention a plus particulièrement pour objet un procédé de fabrication de produits d'isolation à base de laine minérale liée par un liant organique, comprenant les étapes successives suivantes :
(a) la mise à disposition de laine minérale,
(b) l'humidification de la laine minérale,
(c) la mise en contact des fibres de laine minérale humectée avec des particules de liant comprenant un mélange de réactifs thermodurcissable,
(d) la mise en forme du mélange de laine minérale et de particules de liant, et
(e) le chauffage du mélange mis en forme à une température et pendant une durée suffisante pour permettre la condensation des réactifs et la formation d'un produit d'isolation à base de laine minérale liée par un liant organique insoluble et infusible.

La laine minérale mise à disposition à l'étape (a) est de préférence de la laine minérale vierge, c'est-à-dire de la laine minérale constituée de fibres de verre ou de roche obtenues par un procédé de centrifugation de verre fondu ou de roche fondue, appelé fibrage. Les fibres de laine minérale vierge ne comportent pas de liant organique à leur surface.

La laine minérale mise à disposition à l'étape (a) peut également être de la laine minérale recyclée, c'est-à-dire de la laine minérale dont les fibres portent à leur surface un liant organique thermodurci.

Bien entendu, la laine minérale mise à disposition à l'étape (a) peut également être un mélange de laine minérale vierge et de laine minérale recyclée.

La laine minérale mise à disposition est généralement à température ambiante, c'est-à-dire en équilibre thermique avec son environnement.

Il est recommandé de procéder, avant l'étape d'humidification, à une étape d'ouverture des flocons ou mottes de laine minérale. Cette étape d'ouverture a pour fonction de séparer les fibres les unes des autres, de les individualiser afin de les rendre plus accessibles aux particules de liant appliquées à l'étape (c). L'étape d'ouverture peut être mise en oeuvre par exemple par cardage au moyen d'un dispositif approprié connu dans l'état de la technique. Dans un mode de réalisation particulièrement préféré du procédé de l'invention, on utilise pour l'ouverture des fibres minérales un moyen pneumatique, par exemple un flux d'air rapide, circulant de préférence dans une chambre de turbulence. Les inventeurs ont en effet constaté que l'ouverture des flocons de fibres de laine minérale par un passage dans une chambre de turbulence pneumatique permettait avantageusement de désenchevêtrer les fibres tout en limitant le plus possible leur casse. Le produit d'isolation final contient ainsi des fibres plus longues que celles obtenues après utilisation d'un moyen mécanique de désenchevêtrement et ses performances mécaniques s'en trouvent améliorées.

L'étape (b) d'humidification de la laine minérale peut en principe être mise en oeuvre par tout moyen approprié permettant de déposer une quantité d'eau contrôlée sous forme d'un mince film à la surface des fibres. Ainsi, on peut par exemple exposer la laine minérale à de la vapeur d'eau chaude, cette vapeur d'eau se condensant au contact des fibres à température ambiante. On peut également envisager d'exposer la laine minérale à un aérosol d'eau, par exemple un brouillard ou un spray aqueux.

Il est généralement déconseillé d'immerger la laine minérale dans de l'eau ou dans une solution ou dispersion aqueuse car cela déposerait sur les fibres des quantités d'eau trop élevées, susceptibles de dissoudre les particules de liant.

Il convient de veiller à ce que la laine minérale humectée comprenne, au moment où elle est mise en contact avec les particules de liant, de préférence de 0,2 à 1,5 % en poids, plus préférentiellement de 0,3 à 1,2 %, en particulier de 0,4 à 1,0 % en poids d'eau, ces pourcentages étant exprimés par rapport à la laine minérale sèche.

Lorsqu'il est question dans la présente demande d'humecter la laine minérale, cela concerne généralement l'application d'eau sans autres additifs. On peut toutefois envisager l'application de solutions ou dispersions aqueuses contenant par exemple des agents de couplage, une phase huileuse dispersée (agent anti-poussières) ou encore des agents bactéricides, tensioactifs, colorants ou autres additifs connus.

Il découle de ce qui précède que le procédé de la présente invention ne comporte pas d'étape visant à renforcer le lien mécanique entre les fibres minérales par enchevêtrement des fibres minérales ; ainsi, le procédé selon l'invention ne comporte pas d'étape d'aiguilletage (en anglais *needling*) avant ou après l'étape d'humidification ou encore avant ou après l'étape de mise en contact des fibres humectées avec les particules de liant.

L'étape (c) de mise en contact des fibres minérales humectées avec des particules de liant est avantageusement mise en oeuvre à l'aide d'un mélangeur pneumatique, de préférence à l'aide d'un flux d'air comprimé traversant une chambre de turbulences, dans laquelle sont introduites, de préférence en continu, les particules de liant. Bien entendu, le flux d'air comprimé véhiculant les fibres et les particules au cours de la phase de mélange (étape (c)) doit être à une température relativement basse, de préférence inférieure ou égale à la température ambiante, de manière à ne pas totalement évaporer l'eau d'humidification. La température du flux d'air est comprise avantageusement entre 10 et 25 °C, en particulier entre 15 et 20 °C.

D'autres moyens de mise en contact des particules avec la laine minérale peuvent être envisagés. Ainsi, il est possible par exemple de saupoudrer une mince couche de laine minérale humectée uniformément avec une « pluie » de particules, générée par un tamis vibrant sous lequel défile la couche de laine minérale. Ou bien on peut mettre en oeuvre le cardage de la laine minérale humectée sous un tamis vibrant à travers lequel passe un flux régulier de particules de liant.

Ces deux derniers modes d'application des particules sur la laine minérale humectée peuvent bien entendu être suivis d'une étape de brassage dans une chambre de turbulence pneumatique.

Les inventeurs ont été surpris de constater que, malgré la présence simultanée de fibres, d'eau et de particules de liant hydrosoluble, les fibres humides à la surface desquelles sont immobilisées des particules ne se collent pas les unes aux autres et en particulier n'encrassent pas la chambre de turbulence pneumatique servant au brassage, à condition de contrôler la quantité d'eau utilisée pour humecter les fibres.

L'étape (d) de mise en forme de la laine minérale est de préférence réalisée par moulage et/ou compression. Le moule utilisé pour le moulage des produits doit être en un matériau capable de résister à la température de l'étape de thermodurcissement. Il doit par ailleurs avoir une structure permettant à l'air chaud de l'étuve de cuisson de pénétrer facilement dans le produit moulé. Le moule peut par exemple être formé d'un grillage métallique en forme de caisson. Le caisson en grillage métallique est de préférence rempli avec un volume de laine minérale thermodurcissable en vrac supérieur à sa contenance et est ensuite fermé par un couvercle en grillage métallique. La laine minérale se trouve ainsi plus ou moins comprimée en fonction de l'excédent volumique de remplissage. Cet excédent volumique de remplissage du caisson par la laine minérale thermodurcissable est par exemple compris entre 10 % et 150 %, de préférence entre 15 et 100 % et en particulier entre 20 et 80 %.

Lorsque le procédé de la présente invention est un procédé en continu, la mise en forme de la laine minérale peut se faire par exemple par compression au moyen d'un rouleau situé à l'entrée de l'étuve de cuisson sur un convoyeur, le taux de compression étant de préférence compris entre 20 et 70 %, en particulier entre 30 et 60 %.

L'étape de durcissement par chauffage de la laine minérale mise en forme, à une température et pendant une durée suffisante pour permettre la condensation (polymérisation/réticulation) des constituants du liant et la formation d'un liant insoluble est mise en oeuvre dans des conditions familières à l'homme du métier. Lorsque le procédé est un procédé continu, l'étuve de cuisson est avantageusement identique à l'étuve d'une ligne de fabrication de produits d'isolation de l'état de la technique où l'on fait passer de l'air très chaud sous pression à travers le matelas de laine minérale.

La température de chauffage de l'étape (e) est avantageusement comprise entre 130 °C et 240 °C, de préférence entre 180 °C et 230 °C, en particulier entre 190 °C et 220 °C. La durée de chauffage est avantageusement comprise entre 30 secondes et 15 minutes, de préférence entre 1 minute et 10 minutes, en particulier entre 2 et 8 minutes.

On peut facilement ajuster la masse volumique et l'épaisseur des produits d'isolation à base de laine minérale obtenus par le procédé de la présente invention en faisant varier le taux de compression de la laine minérale thermodurcissable au cours de l'étape de cuisson. Les produits d'isolation ont généralement une masse volumique comprise entre 4 et 70 kg/m³, de préférence entre 5 et 60 kg/m³, en particulier entre 6 et 45 kg/m³.

Leur épaisseur est généralement comprise entre 20 mm et 500 mm, avantageusement entre 40 mm et 300 mm, de préférence entre 50 mm et 200 mm, et en particulier entre 60 mm et 150 mm.

Ils présentent une teneur en liant, mesurée par la perte au feu, comprise entre 3 et 9 %, de préférence entre 4 et 8 %, idéalement entre 4,5 et 7 %.

Les liants utilisables dans la présente invention englobent tous les mélanges de réactifs organiques, solides à température ambiante, capables de réagir à température élevée pour former un système polymérique réticulé, insoluble et infusible.

Cette définition exclut les résines phénol formaldéhyde (résoles) qui sont liquides à température ambiante, mais peut englober certaines résines novolaques époxydées solides à température ambiante.

Dans un mode de réalisation avantageux de l'invention, les particules de liant comprennent au moins 50 % en poids, de préférence au moins 70 % en poids, et idéalement au moins 90 % en poids de réactifs biosourcés, renouvelables à court terme, c'est-à-dire non issus de l'industrie pétrolière.

Ces réactifs biosourcés sont choisis en particulier parmi les saccharides, les produits d'hydrogénation de saccharides et les acides polycarboxyliques biosourcés, solides à température ambiante.

Ils comprennent de préférence au moins un sucre et/ou sucre hydrogéné et de l'acide citrique.

La réaction entre les saccharides et/ou produits d'hydrogénation de saccharides et l'acide polycarboxylique est avantageusement catalysée par un catalyseur, notamment par l'hypophosphite de sodium (HPS), également présent dans les particules de liant.

Les systèmes de liants thermodurcissables pour laine minérale à base de saccharides réducteurs, saccharides non-réducteurs et/ou sucres hydrogénés et d'acides polycarboxyliques sont décrits en détail dans les demandes internationales WO2009/080938, WO2010/029266, WO2013/014399, WO2013/021112 et WO2015/132518 au nom de la Demanderesse.

Les réactifs biosourcés comprennent au moins 70 % en poids, de préférence au moins 80 %, et idéalement au moins 90 % en poids de sucres hydrogénés et d'acide citrique.

Les réactifs biosourcés peuvent également être par exemple des réactifs de la réaction de Maillard comprenant, d'une part, des sucres réducteurs et d'autre part un réactif azoté ou aminé, notamment un sel d'ammonium d'un acide carboxylique, d'un acide minéral, tel que l'acide sulfurique ou phosphorique, ou d'un acide organophosphonique ou organosulfonique. De tels liants sont connus par exemple des demandes WO2007/014236, WO2009/019232 et WO2012/037451.

Avantageusement *chaque* particule de liant renferme *tous* les réactifs organiques, biosourcés ou non, nécessaires à la formation d'un réseau réticulé de liant organique. Autrement dit, il est préférable ne pas simplement mélanger plusieurs poudres comprenant chacune un seul type de réactif, par exemple une poudre de sucre avec une poudre d'acide citrique et une poudre d'hypophosphite de sodium, mais d'utiliser une poudre où les différents réactifs et catalyseurs sont intimement mélangés, à l'échelle moléculaire, au sein d'une même particule de liant. Une telle poudre contenant l'ensemble des réactifs dans chacune des particules la constituant peut être préparée par exemple par lyophilisation ou par séchage par pulvérisation (*spray drying*) d'une solution aqueuse des réactifs de liant et catalyseur(s). Les poudres formées par séchage par pulvérisation sont préférées à celles obtenues par lyophilisation car ces dernières risquent de se dissoudre trop facilement dans le film d'eau à la surface des fibres de laine minérale. Par ailleurs, à l'échelle industrielle le séchage par pulvérisation est considérablement plus facile à mettre en oeuvre et moins coûteux.

### Exemple

On prépare par séchage par pulvérisation d'une solution aqueuse une poudre contenant 45,7 % en poids de maltitol, 49,5 % d'acide citrique et 4,76 % d'hypophosphite de sodium. La poudre de liant obtenue est non poisseuse et s'écoule librement.

Des flocons de fibres de verre récupérés de l'étape de formage d'un procédé de production de laine minérale à souffler, sont soumis pendant 5 minutes à une étape d'ouverture (désenchevêtrement) dans une chambre de turbulence pneumatique à l'échelle du laboratoire.

L'humidification de la laine minérale ainsi désenchevêtrée se fait par injection de vapeur d'eau chaude (100°C) au moyen d'un nettoyeur à vapeur (Hoover SCD 1600) dans la chambre de turbulence utilisée pour le désenchevêtrement. A l'échelle du laboratoire les inventeurs ont utilisé un sceau d'eau en plastique avec un trou sur le côté (orifice d'injection de la vapeur) et fermé par une grille.

On vérifie par pesée avant et après humidification que la quantité d'eau fixée sur les fibres minérales soit comprise entre 0,2 et 1,5 %.

On ajoute ensuite à 80 g de fibres minérales humectées, 4 g de la poudre de liant, puis on mélange pendant 5 minutes dans une chambre de turbulence fonctionnant avec de l'air comprimé sec à température ambiante.

On obtient ainsi des fibres de laine minérale légèrement humides portant à leur surface des particules de poudre de liant. Une vérification par microscopie optique (Keyence VHZ 2000) montre que les particules de liant sont visibles. Elles ne se sont pas dissoutes dans le film d'eau.

La laine minérale est ensuite introduite dans un caisson en grillage métallique et comprimée légèrement. L'ensemble est cuit pendant 15 minutes dans une étuve à air chaud thermostatée à 215 °C.

Le produit d'isolation en laine minérale a une masse volumique de 28 kg/m³, une teneur en liant (perte au feu) de 5,4 %. Il présente une résistance à la compression égale de 3,7 ± 0,72 kPa (à 10 % de déformation).

## Revendications

1. Procédé de fabrication de produits d'isolation à base de laine minérale liée par un liant organique, comprenant les étapes successives suivantes :
(a) la mise à disposition de laine minérale,
(b) l'humidification de la laine minérale,
(c) la mise en contact des fibres de laine minérale humectée avec des particules de liant comprenant un mélange de réactifs thermodurcissable,
(d) la mise en forme du mélange de laine minérale et de particules de liant, et
(e) le chauffage du mélange mis en forme à une température et pendant une durée suffisante pour permettre la condensation des réactifs et la formation d'un produit d'isolation à base de laine minérale liée par un liant organique insoluble et infusible.

2. Procédé selon la revendication 1, **caractérisé par le fait que** la laine minérale mise à disposition à l'étape (a) est de la laine minérale vierge ou de la laine minérale recyclée, ou un mélange de laine minérale vierge et de laine minérale recyclée.

3. Procédé selon la revendication 1 ou 2, **caractérisé par le fait que** le produit d'isolation à base de laine minérale obtenu à l'étape (e) a une masse volumique comprise entre 4 et 70 kg/m³, de préférence entre 5 et 60 kg/m³, en particulier entre 6 et 45 kg/m³.

4. Procédé selon l'une quelconque des revendications précédentes, **caractérisé par le fait que** le produit d'isolation à base de laine minérale obtenu à l'étape (e) présente une teneur en liant, déterminée par la perte au feu, comprise entre 3 et 9 %, de préférence entre 4 et 8 %, idéalement entre 4,5 et 7 %.

5. Procédé selon l'une quelconque des revendications précédentes, **caractérisé par le fait qu'**il comporte en outre, avant l'étape (b), une étape d'ouverture des fibres, de préférence par cardage ou par passage de la laine minérale dans une chambre de turbulence.

6. Procédé selon l'une quelconque des revendications précédentes, **caractérisé par le fait que** l'étape (b) d'humidification de la laine minérale se fait par exposition de la laine minérale à de la vapeur d'eau ou à un aérosol d'eau.

7. Procédé selon l'une quelconque des revendications précédentes, **caractérisé par le fait que** la laine minérale humectée comprend, au moment où elle est mise en contact avec les particules de liant, de 0,2 à 1,5 % en poids, de préférence de 0,3 à 1,2 %, en particulier de 0,4 à 1,0 % en poids d'eau.

8. Procédé selon l'une quelconque des revendications précédentes, **caractérisé par le fait que** l'étape (c) de mise en contact des fibres minérales humectées avec des particules de liant est mise en oeuvre à l'aide d'un mélangeur pneumatique, de préférence à l'aide d'un flux d'air comprimé traversant une chambre de turbulences.

9. Procédé selon l'une quelconque des revendications précédentes, **caractérisé par le fait que** les particules de liant comprennent au moins 50 % en poids, de préférence au moins 70 % en poids, et idéalement au moins 90 % en poids de réactifs biosourcés.

10. Procédé selon l'une quelconque des revendications précédentes, **caractérisé par le fait que** les réactifs biosourcés sont choisis parmi les saccharides, les produits d'hydrogénation de saccharides et les acides polycarboxyliques biosourcés.

11. Procédé selon la revendication 9, **caractérisé par le fait que** les réactifs biosourcés comprennent au moins un sucre et/ou sucre hydrogéné et de l'acide citrique.

12. Procédé selon la revendication 11, **caractérisé par le fait que** les réactifs biosourcés comprennent au moins 70 % en poids, de préférence au moins 80 %, et idéalement au moins 90 % en poids de sucres hydrogénés et d'acide citrique.

13. Procédé selon l'une quelconque des revendications précédentes, **caractérisé par le fait que** l'étape (d) de mise en forme de la laine minérale est réalisée par moulage et/ou compression de la laine minérale.

14. Procédé selon l'une quelconque des revendications précédentes, **caractérisé par le fait que** la température de chauffage de l'étape (e) est comprise entre 130 °C et 240 °C, de préférence entre 180 °C et 230 °C.

15. Procédé selon l'une quelconque des revendications précédentes, **caractérisé par le fait qu'**il ne comporte pas d'étape visant à renforcer le liant mécanique entre les fibres minérales par enchevêtrement des fibres minérales

## Patentansprüche

1. Verfahren zum Herstellen von Isolierprodukten auf Basis von Mineralwolle, die durch ein organisches Bindemittel gebunden ist, umfassend die folgenden aufeinanderfolgenden Schritte:
(a) das Bereitstellen von Mineralwolle,
(b) das Befeuchten der Mineralwolle,
(c) das Inberührungbringen von nassgemachten Mineralwollefasern mit Bindemittelpartikeln, umfassend eine Mischung aus warmhärtbaren Reaktanten,
(d) das Formen der Mischung aus Mineralwolle und Bindemittelpartikeln, und
(e) das Erhitzen der geformten Mischung auf eine Temperatur und während einer Dauer, die zum Ermöglichen der Kondensation der Reaktanten und der Ausbildung eines Isolierprodukts auf Basis von Mineralwolle ausreicht, die durch ein unlösliches und unschmelzbares organisches Bindemittel gebunden ist.

2. Verfahren nach Anspruch 1, **dadurch gekennzeichnet, dass** die Mineralwolle, die in Schritt (a) bereitgestellt wird, unberührte Mineralwolle oder recycelte Mineralwolle oder eine Mischung aus unberührter Mineralwolle und recycelter Mineralwolle ist.

3. Verfahren nach Anspruch 1 oder 2, **dadurch gekennzeichnet, dass** das Isolierprodukt auf Basis von Mineralwolle, das in Schritt (e) erhalten wird, eine Dichte zwischen 4 und 70 kg/m³, vorzugsweise zwischen 5 und 60 kg/m³, insbesondere zwischen 6 und 45 kg/m³ besitzt.

4. Verfahren nach einem der vorstehenden Ansprüche,
**dadurch gekennzeichnet, dass** das Isolierprodukt auf Basis von Mineralwolle, das in Schritt (e) erhalten wird, einen Bindemittelgehalt, bestimmt durch den Glühverlust, zwischen 3 und 9 %, vorzugsweise zwischen 4 und 8 %, idealerweise zwischen 4,5 und 7 % vorweist.

5. Verfahren nach einem der vorstehenden Ansprüche,
**dadurch gekennzeichnet, dass** es ferner vor dem Schritt (b) einen Schritt eines Lockerns der Fasern aufweist, vorzugsweise durch Kardieren oder durch Führen der Mineralwolle durch eine Wirbelkammer.

6. Verfahren nach einem der vorstehenden Ansprüche,
**dadurch gekennzeichnet, dass** der Schritt (b) des Befeuchtens der Mineralwolle durch Aussetzung der Mineralwolle gegenüber Wasserdampf oder gegenüber einem Wasseraerosol geschieht.

7. Verfahren nach einem der vorstehenden Ansprüche,
**dadurch gekennzeichnet, dass** die befeuchtete Mineralwolle in dem Moment, in dem sie mit den Bindemittelpartikeln in Berührung gebracht wird, zu 0,2 bis 1,5 Gew.-%, vorzugsweise zu 0,3 bis 1,2 Gew.-%, insbesondere zu 0,4 bis 1,0 Gew.-% Wasser umfasst.

8. Verfahren nach einem der vorstehenden Ansprüche,
**dadurch gekennzeichnet, dass** der Schritt (c) des Inberührungbringens der befeuchteten Mineralfasern mit den Bindemittelpartikeln mittels eines pneumatischen Mischers implementiert wird, vorzugsweise mittels eines Pressluftstroms, der die Wirbelkammer durchquert.

9. Verfahren nach einem der vorstehenden Ansprüche,
**dadurch gekennzeichnet, dass** die Bindemittelpartikel zu mindestens 50 Gew.-%, vorzugsweise zu mindestens 70 Gew.-% und idealerweise zu mindestens 90 Gew.-% biobasierte Reaktanten umfassen.

10. Verfahren nach einem der vorstehenden Ansprüche,
**dadurch gekennzeichnet, dass** die biobasierten Reaktanten aus Sacchariden, Hydrierungsprodukten von Sacchariden und biobasierten Polycarbonsäuren ausgewählt sind.

11. Verfahren nach Anspruch 9, **dadurch gekennzeichnet, dass** die biobasierten Reaktanten mindestens einen Zucker und/oder hydrierten Zucker und Zitronensäure umfassen.

12. Verfahren nach Anspruch 11, **dadurch gekennzeichnet, dass** die biobasierten Reaktanten zu mindestens 70 Gew.-%, vorzugsweise zu mindestens 80 Gew.-% und idealerweise zu mindestens 90 Gew.-% hydrierte Zucker und Zitronensäure umfassen.

13. Verfahren nach einem der vorstehenden Ansprüche,
**dadurch gekennzeichnet, dass** Schritt (d) des Formens der Mineralwolle durch Abformen und/oder Pressen der Mineralwolle erfolgt.

14. Verfahren nach einem der vorstehenden Ansprüche,
**dadurch gekennzeichnet, dass** die Erhitzungstemperatur von Schritt (e) zwischen 130 °C und 240 °C, vorzugsweise zwischen 180 °C und 230 °C liegt.

15. Verfahren nach einem der vorstehenden Ansprüche,
**dadurch gekennzeichnet, dass** es keinen Schritt aufweist, der darauf abzielt, das mechanische Bindemittel zwischen den Mineralfasern durch Verwickeln der Mineralfasern zu verstärken.

## Claims

1. A method for manufacturing insulation products based on mineral wool bound by an organic binder, comprising the following successive steps:
(a) providing a mineral wool,
(b) humidifying the mineral wool,
(c) placing the humidified mineral wool fibers in contact with particles of binder comprising a mixture of thermosetting reagents,
(d) shaping the mixture of mineral wool and binder particles, and
(e) heating the shaped mixture to a temperature and for a period sufficient to allow the condensation of the reagents and the formation of an insulation product based on mineral wool bound by an insoluble and infusible organic binder.

2. The method according to claim 1, **characterized in that** the mineral wool provided in step (a) is virgin mineral wool or recycled mineral wool, or a blend of virgin mineral wool and recycled mineral wool.

3. The method according to claim 1 or 2, **characterized in that** the insulation product based on mineral wool obtained in step (e) has a density comprised between 4 and 70 kg/m³, preferably between 5 and 60 kg/m³, in particular between 6 and 45 kg/m³.

4. The method according to any one of the preceding claims, **characterized in that** the insulation product based on mineral wool obtained in step (e) has a binder content, determined by the loss on ignition, comprised between 3 and 9%, preferably between 4 and 8%, and ideally between 4.5 and 7%.

5. The method according to any one of the preceding claims, **characterized in that** it further comprises, before step (b), a step of opening the fibers, preferably by carding or by passing mineral wool through a turbulence chamber.

6. The method according to any one of the preceding claims, **characterized in that** step (b) of humidifying the mineral wool is carried out by exposing the mineral wool to water vapor or to an aerosol of water.

7. The method according to any one of the preceding claims, **characterized in that** the humidified mineral wool comprises, when it is brought into contact with the binder particles, from 0.2 to 1.5% by weight, preferably from 0.3 to 1.2%, in particular from 0.4 to 1.0% by weight of water.

8. The method according to any one of the preceding claims, **characterized in that** step (c) of bringing the humidified mineral fibers into contact with binder particles is carried out using a pneumatic mixer, preferably using a stream of compressed air passing through a turbulence chamber.

9. The method according to any one of the preceding claims, **characterized in that** the binder particles comprise at least 50% by weight, preferably at least 70% by weight, and ideally at least 90% by weight of bio-based reagents.

10. The method according to any one of the preceding claims, **characterized in that** the bio-based reagents are selected from saccharides, saccharide hydrogenation products and bio-based polycarboxylic acids.

11. The method according to claim 9, **characterized in that** the bio-based reagents comprise at least one sugar and/or hydrogenated sugar and citric acid.

12. The method according to claim 11, **characterized in that** the bio-based reagents comprise at least 70% by weight, preferably at least 80%, and ideally at least 90% by weight of hydrogenated sugars and citric acid.

13. The method according to any one of the preceding claims, **characterized in that** step (d) of shaping the mineral wool is carried out by molding and/or compressing the mineral wool.

14. The method according to any one of the preceding claims, **characterized in that** the heating temperature of step (e) is comprised between 130°C and 240°C, preferably between 180°C and 230°C.

15. The method according to any one of the preceding claims, **characterized in that** it does not include a step aimed at reinforcing the mechanical binder between the mineral fibers by entangling the mineral fibers
